# EUROPÄISCHE PATENTSCHRIFT

(11) **EP 3 256 742 B1**
(45) Veröffentlichungstag und Bekanntmachung des Hinweises auf die Patenterteilung: **10.03.2021**
(21) Anmeldenummer: 16700525.5
(22) Anmeldetag: 09.01.2016
(51) Int. Cl.: F15B 13/02, F16K 17/10

(54) **DRUCKBEGRENZUNGSVENTIL**
PRESSURE-LIMITING VALVE
SOUPAPE DE LIMITATION DE PRESSION

(30) Priorität: 11.02.2015 DE 102015001755
(43) Veröffentlichungstag der Anmeldung: 20.12.2017
(73) Patentinhaber: Hydac Fluidtechnik GmbH, 66280 Sulzbach/Saar (DE)
(72) Erfinder: BRUCK, Peter, 66484 Althornbach (DE); GRILL, Martin, 66606 St. Wendel (DE)
(74) Vertreter: Bartels und Partner, Patentanwälte
(86) Internationale Anmeldenummer: PCT/EP2016/000038
(87) Internationale Veröffentlichungsnummer: WO 2016/128104

(56) Entgegenhaltungen:
- DE-A1- 2 547 646
- DE-A1- 3 045 360
- DE-A1-102012 010 522
- DE-A1-102013 014 673
- KR-A- 20130 040 553
- US-A- 3 583 431
- Anonymous: "Liste der Schaltzeichen (Fluidtechnik) - Wikipedia", , 10. Dezember 2015 (2015-12-10), Seiten 1-11, XP055261892, Gefunden im Internet: URL:https://de.wikipedia.org/wiki/Liste_de r_Schaltzeichen_%28Fluidtechnik%29 [gefunden am 2016-03-31]

## Beschreibung

Die Erfindung betrifft ein Druckbegrenzungsventil mit den Merkmalen im Oberbegriff des Anspruchs 1.

Dahingehende Ventile werden in der Arbeitshydraulik als sogenannte Schockventile eingesetzt. Die Ventile sichern dabei den Druck zwischen dem sogenannten Main Control Valve (MCV) und einem Arbeitszylinder oder Hydromotor ab. Somit ist auch bei einem abgeschalteten MCV eine Absicherung des jeweiligen Zylinders bei von außen auf die Geräte oder Arbeitsmaschinen wirkenden Schockschläge gewährleistet.

Mit dem Ventil ist auch individuelle Maximaldruckabsicherung, die kleiner als der Systemdruck sein kann, möglich. So werden die Ventile paarweise auf der A- und B-Seite der Wegeventile (MCV) eingesetzt. Spricht ein Ventil bei Schockbelastung an, so wird ein Volumenstrom vom Hydraulikzylinder (Motor) in den Tank abgelassen und der Zylinder weicht der Überbelastung aus. Um Kavitation im hydraulischen System nebst den angeschlossenen Ventil- und Maschinengerätschaften zu vermeiden, wirkt das gegenüberliegende Schockventil als Rückschlagventil und ermöglicht ein Nachsaugen von Öl aus dem Tankvolumen. Beim Stand der Technik (vgl. die im Internet Stand Dezember 2014 veröffentlichte Ventillösung RD18329-32/11.10 der Bosch Rexroth Group) werden meist direkt gesteuerte Einbausatzventile verwendet.

Bei diesen vergleichbaren Ventilen ist der Ventilsitz des Rückschlagkolbens in den Steuerblock eingearbeitet. Der Sitz des Druckbegrenzungsventils befindet sich im Inneren des bewegbaren Rückschlagkolbens. Sollte der Sitz des Rückschlagkolbens beschädigt werden, ist der gesamte Steuerblock zu tauschen, weil der Sitz eben Bestandteil des genannten Blocks ist. Der Druckbegrenzungsventilkolben ist relativ klein dimensioniert, weil er sich im Inneren des Rückschlagventilkolbens befindet. Somit wird die für die Funktion wünschenswerte flache Druckbegrenzungs-Kennlinie nicht erreicht. Bedingt durch die Bauart ist es sehr schwer, eine geeignete Ventildämpfung zu realisieren, so dass die Gefahr von Instabilitäten im Betrieb des Ventils besteht.

Die DE 25 47 646 offenbart ein Druckbegrenzungsventil mit Nachsaugfunktion, das vorgesteuert ist und ein Ventilgehäuse aufweist mit mindestens zwei Anschlussstellen in Form eines Arbeitsanschlusses und eines Tankanschlusses und mit einem im Ventilgehäuse längsverfahrbar geführten, federbelasteten Druckbegrenzungsventilkolben sowie mit einem federbelasteten Rückschlagventilkolben für die Realisierung der Nachsaugfunktion, wobei der Rückschlagventilkolben als Hohlkolben ausgeführt und im Ventilgehäuse längsverfahrbar geführt ist, und wobei sich eine Druckfeder mit ihrem einen Ende am Rückschlagventilkolben und mit ihrem anderen Ende an einem Abschlussteil mit einer Mittenöffnung abstützt, die eine permanente Fluidführung von dem Arbeitsanschluss in den Innenraum des Rückschlagventilkolbens bildet.

Die KR 10-2013-0040553, die DE 10 2013 014 673 A1, die US 3 583 431, die DE 10 2012 010 522 A1 und die DE 30 45 360 A1 offenbaren weitere Ventile.

Ausgehend von diesem Stand der Technik liegt der Erfindung die Aufgabe zugrunde, eine Ventilkonstruktion zur Verfügung zu stellen, die als Schockventil mit Druckbegrenzungsfunktion geeignet ist und die die vorstehend beschriebenen Nachteile nicht aufweist.

Eine dahingehende Aufgabe löst ein Druckbegrenzungsventil mit den Merkmalen des Patentanspruches 1 in seiner Gesamtheit.

Gemäß dem Kennzeichen des Patentanspruches 1 ist vorgesehen, dass für eine sitzdichte Verbindung der Kolben miteinander der Rückschlagventilkolben mit einer Schrägfläche versehen ist, die in einen zylindrischen Aufnahmeraum an der Stirnseite des Druckbegrenzungsventilkolbens eingreift.

Dadurch, dass der Rückschlagventilkolben als durchgehend konzipierter Hohlkolben ausgeführt und im Ventilgehäuse unmittelbar längsverfahrbar geführt ist, lässt sich die erfindungsgemäße Lösung als sogenannte Cartridge-Patrone ausgestalten und bei Beschädigung des Ventilsitzes kann die Cartridge-Patrone als Ganzes unmittelbar ausgetauscht werden. Ferner ist mit der genannten erfindungsgemäßen Ventilkonstruktion erreicht, dass es nur einen Sitz gibt, welcher aber einen großen Querschnitt öffnen kann. Somit sind flache Durchflusskennlinien in beide Richtungen möglich, was für die angesprochene Schockfunktion von entsprechender Bedeutung ist, wobei eine geringe Belastung der Bauteile auch bei schnellen Ausweichbewegungen derselben gegeben ist.

Mit der erfindungsgemäßen Lösung ist eine Bedämpfung der Druckbegrenzungsfunktion möglich, was einen stabilen Betrieb erlaubt. Da sowohl der Druckbegrenzungsventilkolben als auch der Rückschlagventilkolben keine Ventilüberdeckung im Rahmen der Funktion aufweisen, reagiert das Ventil als Ganzes extrem schnell auf schockartige Überlastung. Somit treten so gut wie keine Druckspitzen beim schnellen Öffnen im Rahmen der Druckbegrenzungsfunktion auf. Weitere vorteilhafte Ausgestaltungen der erfindungsgemäßen Druckbegrenzungsventillösung sind Gegenstand der Unteransprüche.

Im Folgenden wird das erfindungsgemäße Ventil anhand eines Ausführungsbeispieles nach der Zeichnung näher erläutert. Dabei zeigen in prinzipieller und nicht maßstäblicher Darstellung die
- Fig. 1: in der Art eines hydraulischen Funktionsschaltbildes den grundsätzlichen Aufbau eines vorgesteuerten Druckbegrenzungsventils mit Nachsaugfunktion;
- Fig. 2 bis 4: in der Art von Längsschnittdarstellungen verschiedene Funktionsstellungen des erfindungsgemäßen Ventils; und
- Fig. 5 und 6: vergleichbar der Darstellung nach den Fig. 2 bis 4 eine Darstellung des erfindungsgemäßen Ventils mit elektro-mechanisch ausgebildeter Vorsteuerung.

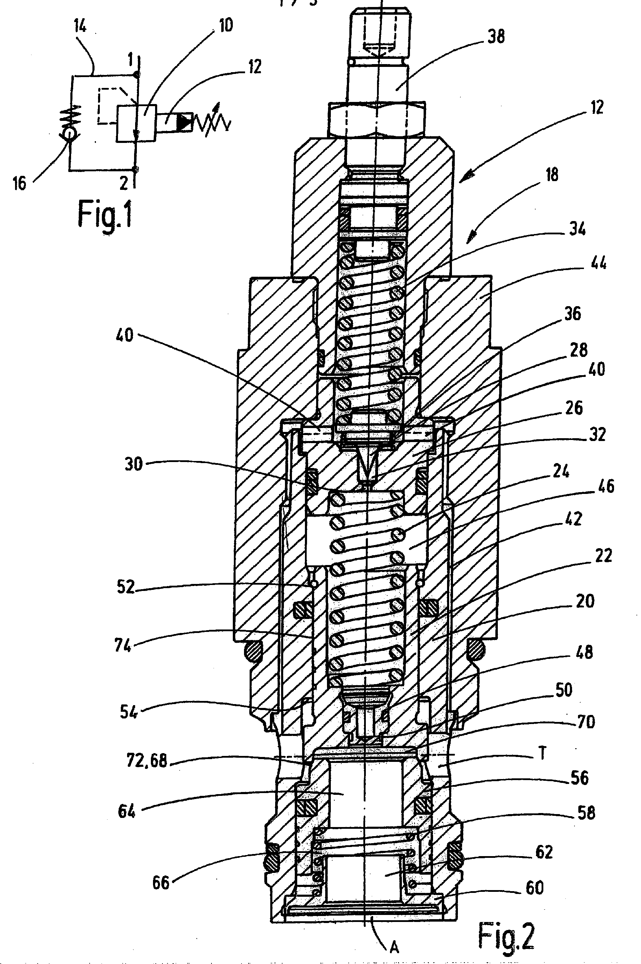

Die Fig. 1 zeigt im Rahmen einer hydraulischen Fluidversorgung von einem Anschlusspunkt 1 nach einem Anschlusspunkt 2. Zwischen die beiden Punkte 1, 2 ist ein Druckbegrenzungsventil 10 geschaltet mit einer mechanischen Ventilvorsteuerung 12. In Abhängigkeit von der Druckeinstellung über die mechanische Ventilvorsteuerung 12 öffnet jedenfalls das Druckbegrenzungsventil 10 zum Tank (Punkt 2) hin, sobald ein vorgebbarer DruckSchwellenwert überschritten ist, um dergestalt den hydraulischen Kreis nebst den dort angeschlossenen Arbeitsmaschinen und Geräten vor schädigenden Druckspitzen oder einer entsprechenden schädigenden Druckerhöhung zu schützen. In einer Bypass-Leitung 14 zwischen den Anschlusspunkten 1 und 2 ist ein federbelastetes Rückschlagventil 16 geschaltet, das in Richtung des Anschlusspunktes 1 entgegen der Wirkung seiner Rückstellfeder öffnet. Dergestalt ist sichergestellt, dass bei einer fehlenden Fluidmenge am Punkt 1 durch Öffnen des Rückschlagventiles 16 Fluid vom Punkt 2 stammend nachgesaugt werden kann. Kommt es zu schockartigen Druckerhöhungen am Punkt 2, lassen sich diese ebenfalls über das federbelastete Rückschlagventil 16 in Richtung des Anschlusspunktes 1 abbauen.

Dergestalt zeigt also die Fig. 1 in symbolischer Schaltdarstellung ein vorgesteuertes Druckbegrenzungsventil 10 mit Nachsaugfunktion über das federbelastete Rückschlagventil 16, insbesondere für den Bereich notwendiger Arbeitsfunktionen bei Baumaschinen (nicht dargestellt) in üblicher Bauart. Die in Fig. 1 in ihre Einzelfunktionen aufgeteilte Ventillösung ist in der Ventilkonstruktion nach den Figuren 2 bis 4 in einer einzelnen Cartridge-Patrone zusammengefasst. Die in Fig. 2 in Längsschnittdarstellung gezeigte Cartridge-Patrone 18 weist ein Ventilgehäuse 20 auf mit zwei Anschlussstellen in Form eines Arbeitsanschlusses A und in Form eines Tankanschlusses T. Der Arbeitsanschluss A ist in Blickrichtung auf die Fig. 2 gesehen an der Unterseite und in axialer Längsrichtung in das Ventilgehäuse 20 eingebracht, wohingegen der Tankanschluss T in Form von einzelnen Bohrungen radial das Ventilgehäuse 20 durchgreift. Ferner ist im Ventilgehäuse 20 längsverfahrbar geführt ein Druckbegrenzungsventilkolben 22 angeordnet. Der Kolben 22 stützt sich gegen eine Druckfeder 24 ab, die als Energiespeicher fungiert. Dabei stützt sich die Druckfeder 24 mit ihrem einen freien unteren Ende am Kolben 22 ab, der insoweit hohlgebohrt ist. Mit ihrem anderen oberen Ende hingegen stützt sich die Druckfeder 24 in der Ausnehmung eines Blendensitzkörpers 26 ab.

Der Blendensitzkörper 26 bildet einen Ventilsitz für einen Sitzkegel 28 aus und weist auf seiner Unterseite die Dämpfungsblende 30 auf. Der Blendensitzkörper 26 ist stationär im Ventilgehäuse 20 angeordnet und ist mit einer Längsbohrung 32 versehen, die an ihrem oberen Ende den Vorsteuersitz mit dem Ventil-Sitzkegel 28 aufweist, und an ihrem gegenüberliegenden unteren Ende ist die Dämpfungsblende 30 vorgesehen. Der Sitzkegel 28 ist zwischen zwei Druckfedern 34, 36 mit unterschiedlichen Federsteifigkeiten eingespannt, wobei die obere Druckfeder 34 sich im Hinblick auf ihre Federvorspannung über einen Spindeltrieb 38 in üblicher und daher nicht mehr näher beschriebenen Weise einstellen lässt. Hebt der Sitzkegel 28 von dem Blendensitzkörper 26 entgegen der Wirkung der Druckfeder 34 bedingt durch die Druckverhältnisse im Ventil und unterstützt von der weiteren Feder 36 von seinem Vorsteuersitz ab, wird eine fluid- oder medienführende Verbindung von der Dämpfungsblende 30 über den Vorsteuersitz in Querkanäle 40 im Blendensitzkörper 26 geöffnet, die wiederum in mindestens einen Längskanal 42 übergehen, der gemäß der Darstellung nach der Fig. 2 zum Tankanschluss T führt. Zur Bildung des jeweiligen Längskanales 42 ist das Ventilgehäuse 20 von einem patronenartigen zusätzlichen Gehäuseteil 44 umfasst.

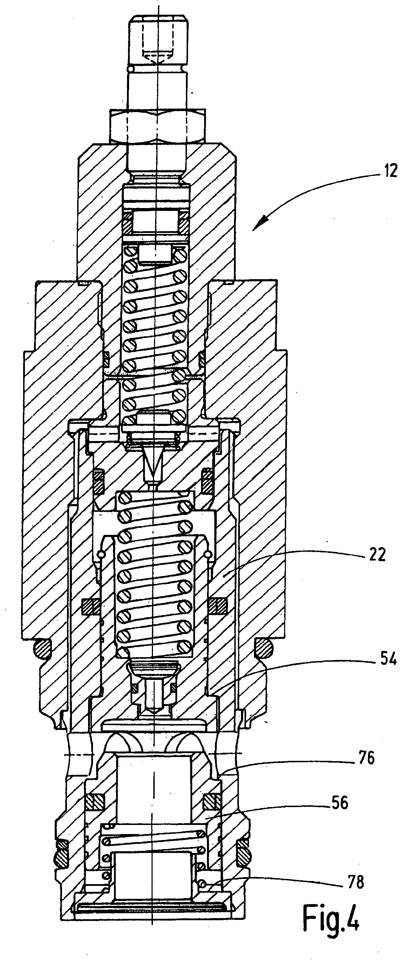

Mit ihrem unteren Ende wiederum mündet die Längsbohrung 32 über die Dämpfungsblende 30 in einen Federraum 46 mit der Druckfeder 24 des Druckbegrenzungsventilkolbens 22 aus. In Blickrichtung auf die Fig. 2 gesehen, ist der dahingehende Kolben 22 auf seiner Unterseite von einem Stopfen 48 verschlossen, der radial von einer Vorsteuerblende 50 durchgriffen ist, die in jeder Verfahrstellung des Kolbens 22 in fluidführender Verbindung mit dem Nutz- oder Arbeitsanschluss A steht. Der Kolben 22 selbst ist zwischen einem oberen Hubanschlag 52 und einem unteren Hubanschlag 54 verfahrbar innerhalb des Ventilgehäuses 22 geführt, wobei gemäß der Darstellung nach der Fig. 2 der Kolben 22 an dem oberen Hubanschlag 52 anliegt, der ebenso wie der untere Hubanschlag 54 durch Gehäuseteile des Ventilgehäuses 22 gebildet ist. Die Darstellung nach der Fig. 4 zeigt hingegen den Kolben 22 in seiner oberen Anschlagstellung mit dem unteren Hubanschlag 54.

Des Weiteren weist die Ventilkonstruktion nach der Fig. 2 einen Rückschlagventilkolben 56 auf, der sich auf seiner Unterseite an einer Druckfeder 58 als weiterem Energiespeicher abstützt. Der Kolben 56 ist als Hohlkolben konzipiert und entlang seines Außenumfanges zumindest teilweise entlang der Innenseite des Ventilgehäuses 20 geführt. Die Druckfeder 58 stützt sich mit ihrem einen freien oberen Ende an einer Stufe im Kolben 56 ab und mit ihrem anderen unteren Ende an einem Abschlussteil 60 mit einer Mittenöffnung 62, die eine permanente Fluidführung vom Arbeitsanschluss A kommend in den zylindrischen Innenraum 64 des Kolbens 56 bildet.

Gemäß der Darstellung nach der Fig. 2 befindet sich sowohl das Druckbegrenzungsventil als auch das Rückschlagventil in seiner geschlossenen Stellung, in der der Druckbegrenzungsventilkolben 22 im Bereich seiner Stirnseite in Anlage ist mit dem zuordenbaren Stirnwandbereich des Rückschlagventilkolbens 56. Demgemäß ist die fluidführende Verbindung zwischen dem Nutzanschluss A zum Tankanschluss T gesperrt respektive unterbunden. Zwecks Freigabe der genannten fluidführenden Verbindung zwischen dem Arbeitsanschluss A und dem Tankanschluss T müssen sich die beiden Kolben 22, 46 relativ zueinander und in axialer Längsrichtung des Ventilkörpers gesehen voneinander entfernen, was im Folgenden noch näher erläutert werden wird. Während die Rückstellfeder 24 für den Druckbegrenzungsventilkolben 22 im Einbau- oder Federraum 46 aufgenommen ist, ist die Rückstell- oder Druckfeder 58 für den Rückschlagventilkolben 56 im weiteren Einbau- oder Federraum 66 aufgenommen, der sich zwischen dem Abschlussteil 60 und der Unterseite des Kolbens 56 erstreckt.

Für eine gewünschte sitzdichte Verbindung der Kolben 22, 56 miteinander ist der Rückschlagventilkolben 56 mit einer Schrägfläche 68 versehen, die in einen zylindrischen Aufnahmeraum 70 an der Stirnseite des Druckbegrenzungsventilkolbens 22 eingreift. Der Druckbegrenzungsventilkolben 22 stellt mithin die Hauptstufe des vorgesteuerten Druckbegrenzungsventils dar, wobei der Durchmesser von der durch die Schrägfläche 68 mitgebildeten Sitzkante 72 gleich dem Durchmesser des Kolbenschaftes 74 des Kolbens 22 zu sein hat, um einen funktionssicheren Betrieb im skizzierten Sinne zu ermöglichen. In der Fig. 2 ist der Kolben 22 in seiner regelnden Stellung bereits in Anlage mit seinem oberen Hubanschlag 52 gezeigt, wobei dies nur den Anschlag-Grenzfall betrifft, und die Regelung kann selbstredend zwischen den Kolben 22 und 56 stattfinden, sofern der Kolben 22 seine Hubanschläge, hier den oberen Hubanschlag 52, verlässt. Die weitere Funktionsbeschreibung geht vom letztgenannten Fall der Positionierung des Kolbens 22 aus.

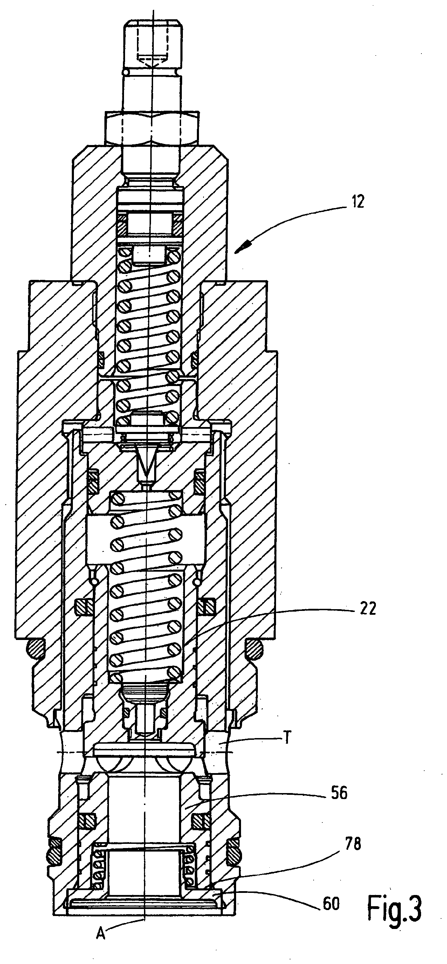

Die Fig. 3 betrifft eine dahingehende Regelstellung, bei der das Rückschlagventil in eine aufgehende Öffnungsstellung gelangt, bei der eine fluidführende Verbindung zwischen dem Arbeitsanschluss A und dem Tankanschluss T erreicht ist. Die genannte Rückschlagventilfunktion kommt dadurch zustande, dass der Druck am Nutz- oder Arbeitsanschluss A (= Punkt 1 in Fig. 1) kleiner als am Tankanschluss T (= Punkt 2 in Fig. 1) ist, wobei der Rückschlagventilkolben 56 in Blickrichtung auf die Fig. 3 gesehen nach unten in seine dortige Öffnungsstellung verfährt, wobei die ihm zugeordnete Druckfeder 58 dann gespannt wird. Soweit der Druckbegrenzungsventilkolben 22 noch nicht den oberen Hubanschlag 52 erreicht haben sollte, folgt dieser jedenfalls der Bewegung des Kolbens 56 nach bis zum Erreichen des dahingehenden oberen Hubanschlages 52, was in Fig. 3 dargestellt ist. Insgesamt bleibt aber festzuhalten, dass sich die beiden Kolben 22, 56 in axialer Richtung voneinander trennen und dabei die Fluidführung zwischen Arbeitsanschluss A und Tankanschluss T freigeben. Dergestalt ist die Nachsaugfunktion über die Öffnung des Rückschlagventilkolbens 56 erreicht.

Fig. 4 zeigt die gleichermaßen mögliche Druckbegrenzungsfunktion neben der Rückschlagventil- oder Nachsaugfunktion. Wird der Druck am Arbeitsanschluss A zu groß, öffnet die Ventilvorsteuerung 12 und ein Vorsteuerölstrom fließt, wobei dieser an der Vorsteuerölblende 50 eine Druckdifferenz aufbaut und aufgrund der unterschiedlich herrschenden Drücke vor, und hinter dem Druckbegrenzungsventilkolben 22 gelangt dieser in eine Kolbenposition nach oben, solange bis er seinen unteren Hubanschlag 54 erreicht. Auch hier folgt wiederum der Rückschlagventilkolben 56 der Bewegung des Druckbegrenzungsventilkolbens 22 nach oben hin nach, bis der Kolben 56 gemäß der Darstellung nach der Fig. 3 seinen oberen Hubanschlag 76 erreicht, nachdem er gemäß der Darstellung nach der Fig. 3 dort seinen unteren Hubanschlag 78 eingenommen hatte, bei dem er auf der Oberseite des Abschlussteiles 60 aufstößt. Auch insoweit trennen sich wiederum beide Kolben 22, 56 in axialer Richtung gesehen voneinander, nunmehr aber mit der Möglichkeit, dass aufgrund des freien Verfahrweges des Kolbens 22 entgegen der Wirkung der Druckfeder 24 dieser für die fluidführende Verbindung zwischen dem Arbeitsanschluss A und dem Tankanschluss T als Druckbegrenzer fungiert.

Wie sich aus den Darstellungen nach den Figuren 2 bis 4 ergibt, ist jedenfalls das Gesamtventil als Cartridge-Patrone ausgebildet und bei einer Beschädigung des Ventilsitzes mit Sitzkante 72 kann das Ventil als Ganzes gegen ein Neuventil getauscht werden, was besonders kostengünstig ist, da nicht mit langen Ausfällen an dem hydraulischen Kreis der Arbeitsmaschine zu rechnen ist. Die Schrägfläche 68, die mit der Sitzkante 72 den Ventilsitz zwischen den beiden Kolben 22, 56 bildet, kann einen relativ großen zylindrischen Querschnitt öffnen, so dass die im Betrieb gewünschten flachen Durchflusskennlinien in beiden Richtungen, also von A nach T sowie von T nach A möglich sind. Mithin kommt es zu einer geringen Belastung der Bauteile auch bei schnellen Ausweichbewegungen der beiden Kolben 22, 56, was für eine gute Schockfunktion des Ventils von extremer Bedeutung ist. Die Ventilkonstruktion erlaubt des Weiteren eine Bedämpfung der Druckbegrenzungsfunktion mittels des Druckbegrenzungsventilkolbens 22 über die Dämpfungsblende 30 im Blendensitzkörper 26. Da die beiden Kolben 22, 56 im Wesentlichen stirnseitig aufeinander zu- und voneinander wegfahren, ist insoweit keine Ventilüberdeckung vorhanden, und das Ventil kann extrem schnell auf schockartige Überlast reagieren. Somit gibt es so gut wie keine Druckspitzen beim schnellen Öffnen der Druckbegrenzungsfunktion über Betätigung des Druckbegrenzungsventilkolbens 22 entgegen der Wirkung seiner Druckfeder 24. Der Öffnungsdruck für die Kolben 22, 56 kann sehr nah an der Belastungsgrenze dieser Bauteile gewählt werden, weil im Einsatzfall der Druck kaum höher als der Öffnungsdruck ansteigen kann. Somit kann die Bau- oder Arbeitsmaschine nahe an der Belastungsgrenze ihrer mechanischen Bauteile betrieben werden.

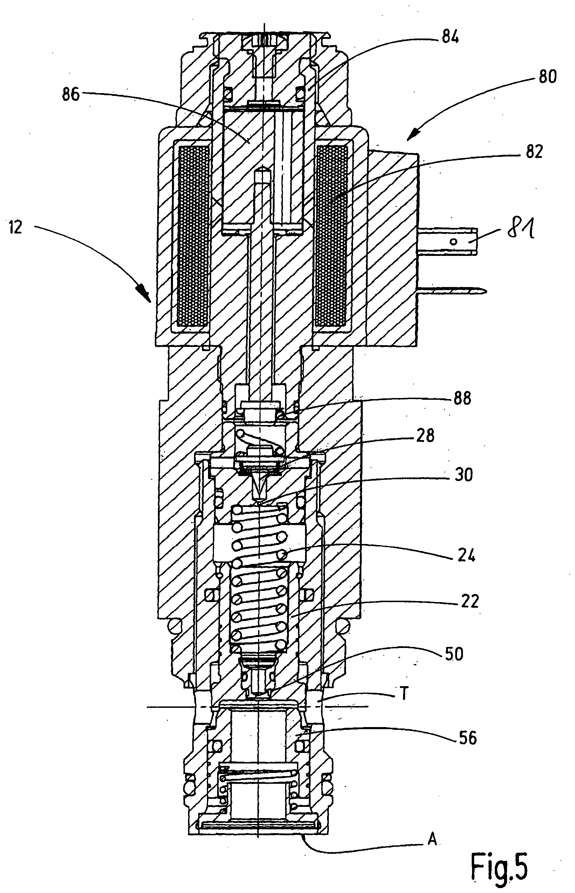

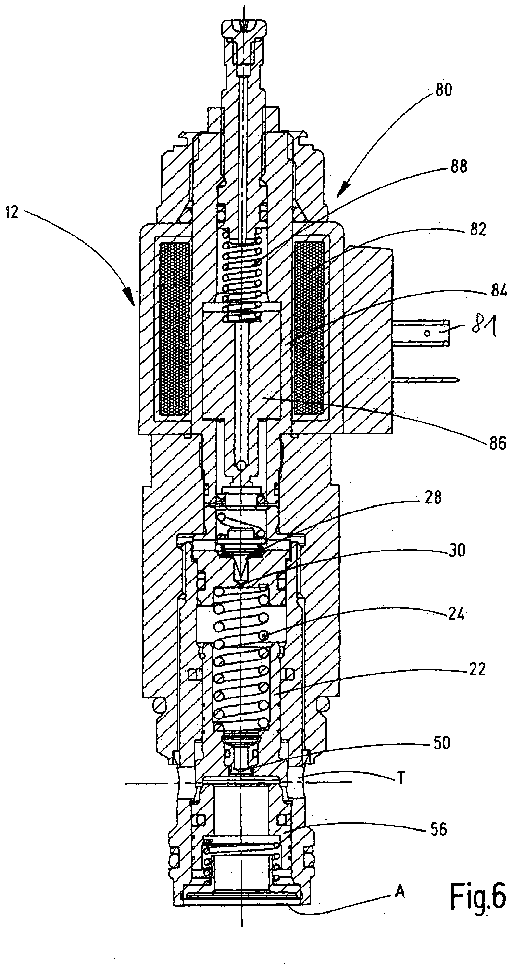

Bauartbedingt kann die Konstruktion auch "einfach" als Proportionalventil betrieben werden, wobei dann die mechanische Verstellung (Ventilvorsteuerung 12) durch einen magnetischen Aktuator (Betätigungsmagnet) zu ersetzen ist, was insgesamt die Möglichkeit eröffnet, die Ventilkonstruktion als Bausatz zu konzipieren. Somit kann jedenfalls das Ventil auf den individuellen Maximaldruck von Anbaugeräten jederzeit angepasst werden. Dies hat so keine Entsprechung im Stand der Technik. So zeigen die Figuren 5 und 6 in der Art von Längsschnittdarstellungen die erfindungsgemäße Ventillösung; diesmal in elektro-mechanischer Vorsteuerausführung, einmal mit einem "drückend" (Fig. 5) und einmal mit einem "ziehend" (Fig. 6) wirkenden Betätigungsmagnetsystem 80. Das jeweilige Betätigungsmagnetsystem 80 weist einen über einen Stromanschluss 81 bestrombaren Spulenkörper 82 auf, nach dessen Bestromen ein in einem Polrohrgehäuse 84 verfahrbar angeordneter Magnetanker 86 sich in Blickrichtung auf die Fig. 5 gesehen entgegen der Wirkung einer Druckfeder 88 nach unten bewegt oder in Blickrichtung auf die Fig. 6 gesehen nach oben, um dergestalt die Vorsteuerfunktion für die eigentlich bereits beschriebene Ventilfunktion des erfindungsgemäßen Druckbegrenzungsventils zu veranlassen. Dahingehende Magnetsysteme zum Ansteuern von längsverschiebbaren Ventilsystemen sind im Stand der Technik hinreichend bekannt, so dass an dieser Stelle hierauf nicht mehr näher eingegangen wird.

## Patentansprüche

1. Druckbegrenzungsventil mit Nachsaugfunktion, das vorgesteuert ist und ein Ventilgehäuse (20) aufweist mit mindestens zwei Anschlussstellen in Form eines Arbeitsanschlusses (A) und eines Tankanschlusses (T) und mit einem im Ventilgehäuse (20) längsverfahrbar geführten, federbelasteten Druckbegrenzungsventilkolben (22) sowie mit einem federbelasteten Rückschlagventilkolben (56) für die Realisierung der Nachsaugfunktion, wobei der Rückschlagventilkolben (56) als Hohlkolben ausgeführt und im Ventilgehäuse (20) längsverfahrbar geführt ist, und wobei sich eine Druckfeder (58) mit ihrem einen Ende am Rückschlagventilkolben (56) und mit ihrem anderen Ende an einem Abschlussteil (60) mit einer Mittenöffnung (62) abstützt, die eine permanente Fluidführung von dem Arbeitsanschluss (A) in den Innenraum (64) des Rückschlagventilkolbens (56) bildet, **dadurch gekennzeichnet, dass** für eine sitzdichte Verbindung der Kolben (22, 56) miteinander der Rückschlagventilkolben (56) mit einer Schrägfläche (68) versehen ist, die in einen zylindrischen Aufnahmeraum (70) an der Stirnseite des Druckbegrenzungsventilkolbens (22) eingreift.

2. Druckbegrenzungsventil nach Anspruch 1, **dadurch gekennzeichnet, dass** für eine Sperrung der fluidführenden Verbindung zwischen den beiden Anschlussstellen (A, T) die beiden Kolben (22, 56) im Bereich ihrer freien, einander benachbarten Stirnseiten in Anlage miteinander sind und zwecks Freigabe dieser Verbindung sich zumindest der eine Kolben (22, 56) vom anderen Kolben (56, 22) in axialer Richtung entfernt.

3. Druckbegrenzungsventil nach Anspruch 1 oder 2, **dadurch gekennzeichnet, dass** die beiden Kolben (22, 56) jeweils mit mindestens einem Hubanschlag (52, 54; 76, 78) innerhalb des Ventilgehäuses (20) versehen sind und dass die jeweilige Rückstellfeder (24, 58) für den zuordenbaren Kolben (22, 56) in gegenüberliegenden Einbau- oder Federräumen (46, 66) im Ventilgehäuse (20) geführt ist.

4. Druckbegrenzungsventil nach einem der vorstehenden Ansprüche, **dadurch gekennzeichnet, dass** der Druckbegrenzungsventilkolben (22) mit einer Vorsteuerblende (50) versehen ist, die fluidführend eine permanente Verbindung zwischen Vorder- und Rückseite dieses Kolbens (22) herstellt.

5. Druckbegrenzungsventil nach Anspruch 4, **dadurch gekennzeichnet, dass** der Druckbegrenzungsventilkolben (22) mit einer Ventilvorsteuerung (12) mit einer Dämpfungsblende (30) zusammenwirkt, die freigegeben eine fluidführende Verbindung von der Vorsteuerblende (50) zum Tankanschluss (T) ermöglichen.

6. Druckbegrenzungsventil nach einem der vorstehenden Ansprüche, **dadurch gekennzeichnet, dass** der Tankanschluss (T) radial und der Arbeitsanschluss (A) axial in das Ventilgehäuse (20) eingebracht sind.

7. Druckbegrenzungsventil nach Anspruch 6, **dadurch gekennzeichnet, dass** in etwa im Bereich der jeweiligen Bohrungsachse für den Tankanschluss (T) die beiden Kolben (22, 56) in ihrer fluidsperrenden Regelstellung in Anlage miteinander sind.

8. Druckbegrenzungsventil nach einem der Ansprüche 3 bis 7, **dadurch gekennzeichnet, dass** für die Realisierung der Nachsaugfunktion der Rückschlagventilkolben (56) sich in Richtung des Arbeitsanschlusses (A) bewegt und der Druckbegrenzungsventilkolben (22) dieser Bewegung bis zum Erreichen seines einen Hubanschlages (52) nachfolgt und anschließend der Rückschlagventilkolben (56) die Verbindung zwischen den beiden Anschlussstellen (A, T) in regelnder Weise freigibt.

9. Druckbegrenzungsventil nach einem der Ansprüche 5 bis 8, **dadurch gekennzeichnet, dass** für die Realisierung der Druckbegrenzungsfunktion die die Vorsteuer- (50) und die Dämpfungsblende (30) aufweisende Ventilvorsteuerung (12) öffnet und dabei der Druckbegrenzungsventilkolben (22) sich vom Arbeitsanschluss (A) wegbewegt und dass der Rückschlagventilkolben (56) dieser Bewegung bis zum Erreichen seines einen Hubanschlages (76) nachfolgt und anschließend der Druckbegrenzungsventilkolben (22) die Verbindung zwischen den beiden Anschlussstellen (A, T) in regelnder Weise freigibt.

## Claims

1. Pressure-limiting valve with feed function, which is pilot-controlled and comprises a valve housing (20) having at least two connection points in the form of a working connection (A) and a tank connection (T) and having a spring-loaded pressure-limiting valve piston (22) which is mounted such as to be longitudinally movable in the valve housing (20) and having a spring-loaded non-return valve piston (56) to carry out the feed function, wherein the non-return valve piston (56) is designed as a hollow piston and is mounted such as to be longitudinally movable in the valve housing (20), and wherein a compression spring (58) is supported at its one end by the non-return valve piston (56) and at its other end by an end part (60) with a central aperture (62), which forms a permanent fluid passage from the working connection (A) to the inner chamber (64) of the non-return valve piston (56), **characterised in that** the non-return valve (56) has an oblique surface (68) to provide a seat-tight connection between the respective pistons (22, 56) of the non-return valve pistons (56), said oblique surface engaging in a cylindrical receiving chamber (70) on the end of the pressure-limiting valve piston (22).

2. Pressure-limiting valve according to claim 1, **characterised in that** the two pistons (22, 56) are in contact with one another in the region of their adjacent free ends to block the fluid-conveying connection between the two collection points (A, T) and at least one piston (22, 56) is removed in an axial direction from the other piston (56, 22) in order to release this connection.

3. Pressure-limiting valve according to either claim 1 or claim 2, **characterised in that** the two pistons (22, 56) are each equipped with at least one travel stop (52, 54; 76, 78) inside the valve housing (20) and **in that** the respective return spring (24, 58) for the piston in question (22, 56) is mounted in opposite installation or spring chambers (46, 66) in the valve housing (20).

4. Pressure-limiting valve according to any one of the preceding claims, **characterised in that** the pressure-limiting valve piston (22) is furnished with a pilot control aperture (50) which creates a permanent fluid-conveying connection between the front and back of this piston (22).

5. Pressure-limiting valve according to claim 4, **characterised in that** the pressure-limiting valve piston (22) interacts with a valve pilot device (12) with a damping aperture (30) which, when released, allow a fluid-conveying connection from the pilot aperture (50) to the tank connection (T).

6. Pressure-limiting valve according to any one of the preceding claims, **characterised in that** the tank connection (T) is inserted in the valve housing (20) radially and the working connection (A) is inserted in the valve housing (20) axially.

7. Pressure-limiting valve according to claim 6, **characterised in that** the two pistons (22, 56) are in contact with one another in their fluid-blocking regulating position approximately in the region of the respective hole axis for the tank connection (T).

8. Pressure-limiting valve according to any one of claims 3 to 7, **characterised in that** the non-return valve piston (56) moves in the direction of the working connection (A) to carry out the feed function of the non-return valve piston (56) and the pressure-limiting valve piston (22) follows this movement until it reaches its one travel stop (52) and then the non-return valve piston (56) releases the connection between the two connection points (A, T) in a regulating manner.

9. Pressure-limiting valve according to any one of claims 5 to 8, **characterised in that** the valve pilot device (12) comprising the pilot aperture (50) and the damping aperture (30) opens to carry out the pressure-limiting function and in this process the pressure-limiting valve piston (22) moves away from the working connection (A) and **in that** the non-return valve piston (56) follows this movement until it reaches its one travel stop (76) and then the pressure-limiting valve piston (22) releases the connection between the two connection points (A, T) in a regulating manner.

## Revendications

1. Soupape de limitation de la pression à fonction de post-aspiration qui est pilotée et qui a un corps (20) de soupape ayant au moins deux points de raccord sous la forme d'un raccord (A) de travail et d'un raccord (T) de réservoir et ayant un piston (22) de soupape de limitation de la pression guidé avec possibilité de se déplacer longitudinalement dans le corps (20) de la soupape et soumis à l'action d'un ressort, ainsi qu'ayant un piston (56) de clapet antiretour soumis à l'action d'un ressort pour la réalisation de la fonction de post-aspiration, le piston (56) de clapet antiretour étant réalisé sous la forme d'un piston creux et étant guidé avec possibilité de se déplacer longitudinalement dans le corps (20) de la soupape et dans laquelle un ressort (58) de compression s'appuie par son extrémité sur un piston (56) du clapet antiretour et par son autre extrémité sur une partie (60) de fermeture ayant une ouverture (62) centrale qui forme une conduite permanente de fluide du raccord (A) de travail à l'espace (64) intérieur du piston (56) du clapet antiretour, **caractérisée en ce que**, pour une liaison à étanchéité de siège des pistons (22, 56) entre eux, le piston (56) du clapet antiretour est pourvu d'une surface (68) inclinée qui pénètre dans un espace (70) cylindrique de logement sur le côté frontal du piston (22) de la soupape de limitation de la pression.

2. Soupape de limitation de la pression suivant la revendication 1, **caractérisée en ce que**, pour interrompre la communication fluidique entre les deux points (A, T) de raccord, les deux pistons (22, 56) sont en contact dans la partie de leur coté frontal libre voisin l'un de l'autre et, en vue de libérer cette communication, au moins l'un des pistons (22, 56) s'éloigne en direction axiale de l'autre piston (56, 22).

3. Soupape de limitation de la pression suivant la revendication 1 ou 2, **caractérisée en ce que** les deux pistons (22, 56) sont pourvus chacun d'au moins une butée (52, 54 ; 76, 78) de course dans le corps (20) de la soupape et **en ce que** le ressort (24, 58) respectif de rappel du piston (22, 56) pouvant être associé est guidé dans des espaces (46, 66) opposés de montage ou de ressort du corps (20) de la soupape.

4. Soupape de limitation de la pression suivant l'une des revendications précédentes, **caractérisée en ce que** le piston (22) de la soupape de limitation de la pression est pourvu d'un diaphragme (50) de pilotage qui ménage fluidiquement une communication permanente entre le côté avant et le côté arrière de ce piston (22).

5. Soupape de limitation de la pression suivant la revendication 4, **caractérisée en ce que** le piston (22) de la soupape de limitation de la pression coopère avec un pilotage (12) de soupape ayant un diaphragme (30) d'amortissement qui rend possible une libération d'une communication fluidique du diaphragme (50) de pilotage au raccord (T) de réservoir.

6. Soupape de limitation de la pression suivant l'une des revendications précédentes, **caractérisée en ce que** le raccord (T) de réservoir est mis radialement et le raccord (A) de travail axialement dans le corps (20) de la soupape.

7. Soupape de limitation de la pression suivant la revendication 6, **caractérisé en ce que**, environ dans la région de l'axe respectif de l'alésage pour le raccord (T) de réservoir, les deux pistons (22, 56) sont mis en contact dans leur position de réglage faisant barrage au fluide.

8. Soupape de limitation de la pression suivant l'une des revendications 3 à 7, **caractérisée en ce que**, pour réaliser la fonction de post-aspiration, le piston (56) du clapet antiretour se déplace dans la direction du raccord (A) de travail et le piston (22) de la soupape de limitation de la pression suit ce mouvement jusqu'à atteindre l'une de ses butées (52) de course et, ensuite, le piston (56) du clapet antiretour dégage, d'une façon réglée, la communication entre les deux points ((A, T) de raccord.

9. Soupape de limitation de la pression suivant l'une des revendications 5 à 8, **caractérisé en ce que**, pour réaliser la fonction de limitation de la pression, le pilotage (12) de la soupape ayant le diaphragme (50) de pilotage et le diaphragme (30) d'amortissement s'ouvre et ainsi le piston (22) de la soupape de limitation de la pression s'éloigne du raccord (A) de travail et **en ce que** le piston (56) du clapet antiretour suit ce déplacement jusqu'à atteindre l'une de ses butées (76) de course et, ensuite, le piston (22) de la soupape de limitation de la pression dégage, de manière réglée, la communication entre les deux points (A, T) de raccord.
